# EUROPEAN PATENT APPLICATION

(11) **EP 2 098 973 A1**
(43) Date of publication of application: **09.09.2009**
(21) Application number: 09161528.6
(22) Date of filing: 03.10.2006
(51) Int. Cl.: G06F 21/00

(54) **Method and system for tracking and managing rights for digital content**

(30) Priority: 28.10.2005 US 261687
(62) Divisional of application: 06825548.8
(71) Applicant: Catch Media, Inc., Douglasville, GA 30135 (US)
(72) Inventor: Ben-Yaacov, Yaacov, Douglasville, GA 30135 (US); Ben-Yaacov, Boaz, Douglasville, GA 30135 (US)
(74) Representative: Körber, Martin Hans

(57) **Abstract**

A method for digital rights management for a copyright work that is copied from device to device from among a plurality of devices, some of which are parent devices and some of which are child devices, and wherein a child device may be registered with a parent device, including copying a digital work from a parent device, P 1, to a child device, C1, registered with device P 1, the digital work encapsulating digital rights management (DRM) data that serves to permit full access to the digital work by parent device P1, and to deny access to the digital work by devices other than device P1, modifying the DRM data in the copy of the digital work within device C1, so as to permit full access to the digital work, for a prescribed time period, by device C1 and by child devices other than device C1, inserting auxiliary DRM data in the copy of the digital work within device C1, so as to permit full access to the digital work by device C1, and so as to permit limited access to the digital work by child devices other than device C1, if the digital work is copied from device C1 to a parent device P2 other than device P1, then modifying the DRM data in the copy of the digital work within device P2, so as to permit limited access to the digital work by device P2, and removing the auxiliary DRM data in the copy of the digital work within device P2, and if the digital work is copied from device C1 to a child device C2 other than device C1, then modifying the auxiliary DRM data in the copy of the digital work within device C2, so as to permit limited access to the digital work by child device C2 and so as to permit limited access to the digital work by child devices other than device C2. A system and a computer-readable storage medium are also described and claimed.

## Description

### CROSS REFERENCES TO RELATED APPLICATIONS

This application is a continuation-in-part of assignee's pending application U.S. Serial No. 10/893,473, filed on July 16, 2004, entitled "*Method and System for Managing Rights for Digital Music*," which is a continuation-in-part of assignee's pending application U.S. Serial No. 10/829,581, filed on April 21, 2004, entitled "*Portable Music Player and Transmitter*," which is a continuation-in-part of assignee's pending application U.S. Serial No. 10/336,443, filed on January 2, 2003, entitled "*Automatic Digital Music Library Builder*."

### FIELD

Embodiments of the present invention relate to rights management for use and transfer of digital music recordings.

### BACKGROUND

Consumers are generally aware to some extent of copyright laws concerning digital recordings, but there are no automatic features in place to assist consumers in abiding with them. For example, a consumer who purchases a song on a CD, or through a subscription with an Internet music sharing service such as Napster, generally does not know if he is permitted to make personal copies of the song for himself, on one or more of his computers, or on one or more CDs, or on one or more MP3 players.

Digital rights management (DRM) technology addresses this concern by encapsulating a DRM wrapper within digital songs. The DRM wrapper, which is generally encrypted, specifies whether or not a specific device has the necessary rights to play a specific song. Hardware or software within the player then enables or disables playing of the song accordingly. Generally, DRM systems only enable playing of a song on a device if the owner of the device has purchased a license for the song. If the owner of the device has not purchased a license for the song and wishes to do so, and if the device is connected via a computer network to a licensing authority, referred to as a "clearing house," then the owner may purchase a license from the clearing house, in which case the DRM wrapper is updated so as to reflect current ownership.

A disconnected device, however, generally cannot purchase such a license unless the disconnected device connects with a connected device that can access a clearing house. As such, the disconnected device cannot play a song that is not licensed by the owner of the device, when the owner is not located at a point of connection.

For marketing purposes, it would be beneficial if disconnected devices could play trial versions of songs that are not licensed by the device owners, and if such trial versions could be copied as trial versions from one disconnected device to another. The owners of the disconnected devices could then listen to the trial versions of the songs and afterwards, if they wish to purchase licenses to the songs, could do so by connecting their disconnected devices to a connected device, at their convenience, and purchasing licenses from a clearing house.

It would thus be beneficial if a merchandising system was in place to manage digital rights for songs that are obtained as trial versions, copied from device to device, and subsequently converted to fully licensed versions.

It would also be beneficial to track the history of license purchases within such a merchandising system, as trial versions of songs are copied from device to device through a sharing chain of friends, some of whom eventually purchase licenses to the trial versions. In particular, tracking of licensing history would enable a profit-sharing arrangement whereby a portion of the payment paid by a person along the sharing chain is allotted to the original clearing house or vendor from which a song was licensed.

### SUMMARY

One embodiment of the present invention concerns a configurable method and system for managing copyright privileges when a digital work is copied from one device to another. Embodiments of the present invention apply to many forms of digital copyright works, including inter alia songs, movies and pictures. The ensuing description refers primarily to digital songs, for the sake of clarity.

In a general setting, digital songs are (i) acquired from external sources, including inter alia Internet music services such as iTunes^{®} and Napster^{®}, CDs and other recording media, music kiosks and broadcast music stations such as cable and satellite stations; and thereafter (ii) copied between digital audio recorders and digital audio players. Transfer of songs may be likened in some respects to a virtual water distribution system with nodes and conduits, wherein the nodes store water and the conduits transmit water from one node to another. External nodes represent music sources such as record stores, kiosks and Internet music services; and internal nodes represent audio recorders and players.

Within this paradigm of water distribution, digital rights management concerns controlling valves that restrict the flow of water within the pipes, and controlling access to the water in the nodes.

For one embodiment of the present invention,
- digital audio devices may be registered with one another; and
- songs stored within recorders and players are labeled as being "Purchased," "Recorded" or "Try & Buy."

Preferably, digital audio players are registered with either zero or one digital audio recorder. In other words, a digital player cannot be registered with more than one recorder, but one digital recorder can have multiple digital players registered therewith.

For one embodiment, the label of a song is used to identify copyrights associated therewith. The Try & Buy label is used for promotional or trial versions of songs, and generally include an expiration event, upon occurrence of which the song "evaporates"; i.e., can no longer be played in its entirety.

For one embodiment of the present invention, copyright management is achieved by (i) restricting a song from being copied from a source device to a target device; and (ii) specifying the way a song is labeled within a target device when the song is copied from a source device to the target device -- based on the source device, the target device, the label of the song in the source device, and based on whether or not the source and target device are commonly registered.

Further, for an alternate embodiment of the present invention, copyright management may restrict the number of copies permitted to be made for a song resident on a source device. For example, when a recorder is used to copy songs to a plurality of players, up to three copies of a song may be permitted.

Embodiments of the present invention enable audio device manufacturers to configure a flexible logic for digital rights management in accordance with legal requirements in their respective locales. Various such configurations are described in the detailed description hereinbelow.

Embodiments of the present invention may be implemented in conjunction with third-party digital rights management systems in order to comply with third-party DRM rules and in order to ensure backward compatibility with third-party players. As such, one embodiment of the present invention provides an enhancement to conventional DRM systems, within conventional architectures.

Embodiments of the present invention may also be used advantageously for tracking usage and merchandising. Specifically, a first user purchases a license to a digital work. Subsequently the digital work is copied from device to device along a sharing chain of friends, one friend sharing with the next friend. The shared copies are Try & Buy copies, which can only be accessed in limited ways. Some or all of the friends along the chain may eventually purchase their copy of the digital work, converting it from a Try & Buy copy to an owned copy. Using an embodiment of the present invention, when such a friend purchases a license to convert a shared Try & Buy copy of the digital work into an owned copy, information as to the original source of purchase as well as the friend's usage is tracked. This information can be used, inter alia, to allot a portion of the payment received by the friend to the original source of purchase, and to aggregate usage and purchase statistics.

In distinction from the present invention, prior art digital rights managers do not include the fundamental feature of adapting labels from source label to target label when a song is copied from a source device to a target device. One such prior art digital rights manager is Microsoft Corporation's Windows Media Rights Manager, which implements digital rights by encrypting audio files using keys, and packaging the files with key IDs. In order to play the audio files, a user obtains a license, which contains a key to decrypt the file.

Another such prior art digital rights manager is Apple Corporation's iTunes rights manager, which registers iPod music players with computers, so that an iPod cannot download an MP3 song from a computer that it is not registered with.

There is thus provided in accordance with an embodiment of the present invention a method for digital rights management for a copyright work that is copied from device to device from among a plurality of devices, some of which are parent devices and some of which are child devices, and wherein a child device may be registered with a parent device. A digital work is copied from a parent device, P1, to a child device, C1, registered with device P1, the digital work encapsulating digital rights management (DRM) data that serves to permit full access to the digital work by parent device P1, and to deny access to the digital work by devices other than device P1. The DRM data in the copy of the digital work within device C1 is modified, so as to permit full access to the digital work, for a prescribed time period, by device C1 and by child devices other than device C 1. Auxiliary DRM data is inserted in the copy of the digital work within device C1, so as to permit full access to the digital work by device C1, and so as to permit limited access to the digital work by child devices other than device C1. If the digital work is copied from device C1 to a parent device P2 other than device P1, then the DRM data in the copy of the digital work within device P2 is modified, so as to permit limited access to the digital work by device P2. The auxiliary DRM data in the copy of the digital work within device P2 is removed, and if the digital work is copied from device C1 to a child device C2 other than device C1, then the auxiliary DRM data in the copy of the digital work within device C2 is modified, so as to permit limited access to the digital work by child device C2 and so as to permit limited access to the digital work by child devices other than device C2.

There is further provided in accordance with an embodiment of the present invention a method for digital rights management for a copyright digital work that is copied from device to device from among a plurality of devices, some of which are parent devices and some of which are child devices, and wherein a child device may be registered with a parent device, and wherein a copy of the digital work may encapsulate digital rights management (DRM) data that serves to determine one of at least two levels of access, namely, (i) permit full access to the digital work, or (ii) permit limited access to the digital work. Rules are enforced for setting the DRM data within copies of the digital work that encapsulate DRM data, according to the following principles: (1) if the digital work is copied from a child device, C1, to a parent device, P1, with which C1 is registered, then the DRM data in the copy of the digital work within device P1 is kept at the same access level as the copy of the digital work within device C1; (2) if the digital work is copied from a child device, C1, which is registered with a parent device, P1, to another child device, C2, which is also registered with a parent device, P1, then the DRM data in the copy of the digital work within device C2 is kept at the same access level as the copy of the digital work within device C1; (3) if the digital work is copied from a child device, C1, which is registered with a parent device, P1, to a parent device, P2, other than P1, then the DRM data in the copy of the digital work within device P2 is set to access level (ii); (4) if the digital work is copied from a child device, C1, which is registered with a parent device, P1, to a child device, C2, that is not registered with device P1, then the DRM data in the copy of the digital work within device C2 is set to access level (ii); (5) if the digital work is copied from a parent device, P1, to another parent device, P2, then the DRM data in the copy of the digital work within device P2 is set to access level (ii); (6) if the digital work is copied from a parent device, P1, to a child device, C1, that is not registered with device P1, then the DRM data in the copy of the digital work within device C1 is set to access level (ii).

There is yet further provided in accordance with an embodiment of the present invention a method for tracking usage and fulfillment of a copyright digital work that is copied from device to device from among a plurality of devices, some of which are parent devices and some of which are child devices, and wherein a child device may be registered with a parent device, and wherein a copy of the digital work may encapsulate digital rights management (DRM) data that serves to determine one of at least two levels of access, namely, (i) permit full access to the digital work, or (ii) permit limited access to the digital work, and wherein a copy of the digital work may be licensed from a fulfiller in at least two ways, namely, (A) receiving a copy of the digital work with DRM data set to access level (i), or (B) adjusting the DRM data within an already existing copy of the digital work from access level (ii) to access level (i). A cumulative record of licenses is generated within copies of the digital work, including (1) maintaining a record of source information within a copy of the digital work, when the digital work is copied from a source to a device; (2) maintaining a record of purchase information within a copy of the digital work, when the digital work is licensed from a fulfiller; (3) maintaining a record of usage information within a copy of the digital work, for the current device in which the copy of the digital work is stored; and (4) further maintaining a record of usage information within a copy of the digital work, for a previous device from which the copy of the digital work on the current device was copied, if the current device is a parent device and the previous device is a child device that is registered with the current device, or if the previous device is a parent device and the current device is a child device that is registered with the previous device.

There is additionally provided in accordance with an embodiment of the present invention a system for digital rights management for a copyright work that is copied from device to device from among a plurality of devices, some of which are parent devices and some of which are child devices, and wherein a child device may be registered with a parent device. A digital rights manager within a parent device P1 is provided for: (1) copying a digital work from device P1 to a child device, C1, registered with device P1, the digital work encapsulating digital rights management (DRM) data that serves to permit full access to the digital work by parent device P1, and to deny access to the digital work by devices other than device P1; (2) modifying the DRM data in the copy of the digital work intended for device C1, so as to permit full access to the digital work, for a prescribed time period, by device C1 and by child devices other than device C1; and (3) inserting auxiliary DRM data in the copy of the digital work intended for device C1, so as to permit full access to the digital work by device C1, and so as to permit limited access to the digital work by child devices other than device C1. A digital rights manager within child device C1 is provided for: (1) for copying the digital work from device C1 to a parent device P2 other than device P1; (2) modifying the DRM data in the copy of the digital work intended for device P2, so as to permit limited access to the digital work by device P2; (3) removing the auxiliary DRM data in the copy of the digital work intended for device P2; (4) copying the digital work from device C1 to a child device C2 other than device C1; (5) and modifying the auxiliary DRM data in the copy of the digital work intended for device C2, so as to permit limited access to the digital work by child device C2 and so as to permit limited access to the digital work by child devices other than device C2.

There is moreover provided in accordance with an embodiment of the present invention a system for digital rights management for a copyright digital work that is copied from device to device from among a plurality of devices, some of which are parent devices and some of which are child devices, and wherein a child device may be registered with a parent device, and wherein a copy of the digital work may encapsulate digital rights management (DRM) data that serves to determine one of at least two levels of access, namely, (i) permit full access to the digital work, or (ii) permit limited access to the digital work. A digital rights manager within a child device C1 is provided for enforcing rules for setting the DRM data within copies of the digital work that encapsulate DRM data, according to the following principles: (1) if the digital work is copied from the child device, C1, to a parent device, P1, with which C1 is registered, then the DRM data in the copy of the digital work within device P1 is kept at the same access level as the copy of the digital work within device C1; (2) if the digital work is copied from the child device, C1, which is registered with a parent device, P1, to another child device, C2, which is also registered with a parent device, P1, then the DRM data in the copy of the digital work within device C2 is kept at the same access level as the copy of the digital work within device C1; (3) if the digital work is copied from the child device, C1, which is registered with a parent device, P1, to a parent device, P2, other than P1, then the DRM data in the copy of the digital work within device P2 is set to access level (ii); and (4) if the digital work is copied from the child device, C1, which is registered with a parent device, P1, to a child device, C2, that is not registered with device P1, then the DRM data in the copy of the digital work within device C2 is set to access level (ii). A digital rights manager within a parent device P1 is provided for enforcing rules for setting the DRM data within copies of the digital work that encapsulate DRM data, according to the following principles: (1) if the digital work is copied from the parent device, P1, to another parent device, P2, then the DRM data in the copy of the digital work within device P2 is set to access level (ii); and (2) if the digital work is copied from the parent device, P1, to a child device, C1, that is not registered with device P1, then the DRM data in the copy of the digital work within device C1 is set to access level (ii).

There is further provided in accordance with an embodiment of the present invention a system for tracking usage and fulfillment of a copyright digital work that is copied from device to device from among a plurality of devices, some of which are parent devices and some of which are child devices, and wherein a child device may be registered with a parent device, and wherein a copy of the digital work may encapsulate digital rights management (DRM) data that serves to determine one of at least two levels of access, namely, (i) permit full access to the digital work, or (ii) permit limited access to the digital work, and wherein a copy of the digital work may be licensed from a fulfiller in at least two ways, namely, (A) receiving a copy of the digital work with DRM data set to access level (i), or (B) adjusting the DRM data within an already existing copy of the digital work from access level (ii) to access level (i). Cumulative record managers within parent devices and child devices are provided for generating cumulative records of licenses within copies of the digital work, the cumulative record including: (1) a record of source information within a copy of the digital work, when the digital work is copied from a source to a device; (2) a record of purchase information within a copy of the digital work, when the digital work is licensed from a fulfiller; (3) a record of usage information within a copy of the digital work, for the current device in which the copy of the digital work is stored; and (4) a record of usage information within a copy of the digital work, for a previous device from which the copy of the digital work on the current device was copied, if the current device is a parent device and the previous device is a child device that is registered with the current device, or if the previous device is a parent device and the current device is a child device that is registered with the previous device.

### BRIEF DESCRIPTION OF THE DRAWINGS

Embodiments of the present invention will be more fully understood and appreciated from the following detailed description, taken in conjunction with the drawings in which:

FIG. 1 is a front view of a digital archive, referred to as a "Nest," in accordance with an embodiment of the present invention;

FIG. 2 is a side view of a music player, referred to as an "Egg," in accordance with an embodiment of the present invention;

FIG. 3 is a bottom view of the music player of FIG. 2, in accordance with an embodiment of the present invention;

FIG. 4 is an illustration of a user interface for copying songs from the digital archive of FIG. 1 into the music player of FIG. 2, in accordance with an embodiment of the present invention;

FIG. 5 is a simplified flowchart of a method for "checking-out" songs from the digital archive of FIG. 1 to the music player of FIG. 2, in accordance with an embodiment of the present invention;

FIG. 6 is a simplified flowchart of a method for "checking-in" songs from the music player of FIG. 2 to the digital archive of FIG. 1, in accordance with an embodiment of the present invention;

FIG. 7 is a simplified flowchart of a method for tracking the number of times the same song is broadcast while the digital archive of FIG 1 is recording music, in accordance with an embodiment of the present invention;

FIG. 8 is a simplified block diagram of a digital rights management system, in accordance with an embodiment of the present invention;

FIG. 9 is a simplified flow chart for a digital rights management method, in accordance with an embodiment of the present invention;

FIGS. 10A and 10B are simplified illustrations of a first consumer use case of acquiring a song in accordance with an embodiment of the present invention;

FIGS. 11A and 11B are simplified illustrations of a second consumer use case of acquiring a song in accordance with an embodiment of the present invention;

FIGS. 12A, 12B and 12C are simplified illustrations of a third consumer use case of acquiring a song in accordance with an embodiment of the present invention;

FIG. 13 is a simplified illustration of a workflow for implementing digital rights management in conjunction with a third-party DRM system, in accordance with an embodiment of the present invention; and

FIG. 14 is a simplified workflow for usage and merchandising tracking in accordance with an embodiment of the present invention.

### LIST OF APPENDICES

Appendix A is a source listing of an XML file for usage and merchandising tracking, in accordance with an embodiment of the present invention.

### DETAILED DESCRIPTION

Digital music players are proliferating as standalone consumer electronic devices, such as MP3 players, as bundled components within portable devices such as personal data assistants (PDAs) and cell-phones, and as home network appliances. Listeners typically build up their own personal libraries of digital songs, which are stored on memory units such as hard disk drives and removable memory cards. Digital songs are typically acquired through the Internet via subscription services and peer-to-peer exchanges, or by converting songs from a compact disc (CD) and importing them into an MP3 library. Acquiring digital music files may infringe copyrights, unless the files are validly obtained through a service that pays royalties to the recording industry.

Digital songs typically include audio data and auxiliary data, referred to as meta-data, used to index the songs within the listener's library. For example, within MP3 files, meta-data is accessed through an ID3Tag; WMA files embed meta-data within the files, and also within the filenames themselves. By indexing the songs, a listener can inspect his library, search his library to access individual songs therein, remove songs, and create playlists. Typically audio players provide a user interface through which users view meta-data.

Barring copyright issues, building up a digital music library requires a lot of time and work. Typically, a listener first searches the Internet for one or more songs of interest, then identifies locations of the songs, and then downloads them into a database associated with a media player. Songs are typically stored as digital files, formatted in compliance with a standard format, such as MP3 or WMA. Once the songs are downloaded, the listener typically uses software such as Windows Media Player or Winamp to play the songs on a computer, or alternatively he copies the songs onto a hardware device, such as an iPod^{™} or MP3 player, that plays the songs.

A shortcoming in the world of digital music is the great effort required to build custom music libraries at home. Often individuals spend nights on end downloading their favorite songs and building their own personal music libraries. An alternative is to either purchase libraries that have been prepared by others, but often someone else's library does not match another listener's taste and the listener prefers to collect his own favorite songs.

A popular source for a listener to hear his favorite songs is on music stations. Cable, satellite broadcast and the Internet provide music channels for almost every genre of music - classical music, rock and roll, jazz, music of the 80's, etc. A listener can enjoy music according to his taste by subscribing to such broadcast services.

Embodiments of the present invention enable a listener to automatically copy and import songs that are broadcast from a music station into his digital music library, along with the songs' meta-data required for indexing his library. Using embodiments of the present invention, a listener, with practically no effort, can automatically build up a large digital music library with tens of thousands of his choice of songs, all properly indexed for search and retrieval. Moreover, an additional feature of an embodiment of the present invention enables the listener to select which songs from among those broadcast on the music stations are to be imported into his library, based on one or more of criteria including, inter alia, genre, song title, artist, album, and length of song.

Copying songs that are broadcast from a music station is akin to copying television programs onto a VCR. Copyright law permits a consumer to copy television programs broadcast to his home onto his VCR. The technology for automatically copying songs, however, is more complex since raw audio recording from a music station does not provide the meta-data necessary to identify such songs and incorporate them into a digital music library. Moreover, each song has to be separated out from other songs, because songs are played sequentially with overlapping on the music station, generally without breaks in between.

Embodiments of the present invention concern a method and system for automatically building digital music libraries, from music channels broadcast through cable and satellite stations. For one embodiment of the present invention, broadcast songs are recorded into a digital music library, along with meta-data necessary for indexing and accessing each individual song, and for display while the songs are being played. Using an embodiment of the present invention, the digital music library generated from the broadcast music serves as a large library of individual songs, with full search and access capability.

An embodiment of the present invention provides a system that enables the listener to automatically digitally record broadcast songs into a digital music library, and automatically index each recorded song according to genre, song title, artist, and album title, as described hereinbelow. Additionally, an embodiment of the present invention enables the listener to filter songs to be automatically recorded, by specifying, inter alia, a genre, song tile or artist, instead of recording all of the broadcast songs. The listener need not be present while the system of an embodiment of the present invention is in operation. It may thus be appreciated that an embodiment of the present invention enables automatic generation of large libraries of songs.

An embodiment of the present invention is embodied in a programmable device, referred to herein as a "Nest," that can interface with computers, with MP3 players and other digital music players, and with other electronic devices that include MP3 players or other digital music players therewithin, including, inter alia, cell phones, PDAs, home network appliances, and Internet appliances. For a first embodiment, the Nest is coupled to a satellite / cable receiver; for a second embodiment, the Nest is coupled to a television; for a third embodiment, the Nest is coupled to various external components via a USB and a Firewire connection.

For all embodiments, the memory storing the digital music library can be either a large hard disk situated within the Nest itself, or one or more smaller removable memory units such as compact disks and memory cards, or a combination of hard disk and removable memory. The advantage of a large hard disk is that the listener's music library is consolidated into a single library that can be searched and accessed in its entirety. The advantage of removable memory units, such as compact disks, is that the listener can insert the disks into portable players such as MP3 players. Assuming that 40 songs on average require 128 MB of data and include one and a half hour's worth of listening, a large 80 GB hard disk can hold a library of approximately 25,600 songs; and a 640 MB compact disk can hold approximately 200 songs, or about 7½ hours worth of listening.

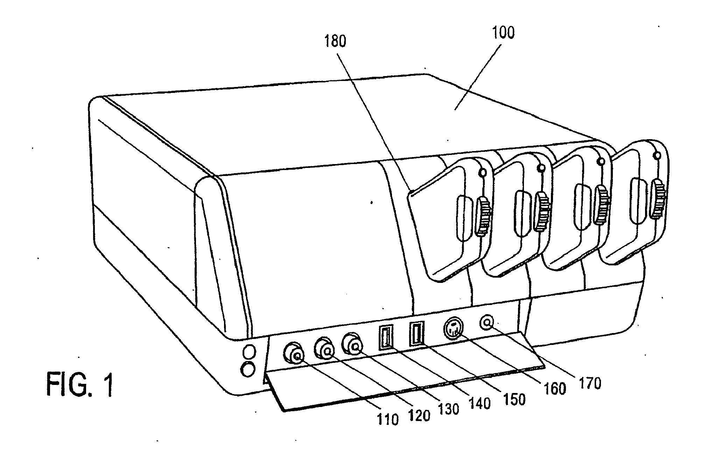

FIG. 1 is a front view of a Nest 100, in accordance with an embodiment of the present invention. Nest 100 is shown with its front panel open. On the left side of the front panel are female left and right analog audio-in connectors 110 and 120, and female analog video-in connector 130 used for connecting auxiliary audio and video devices, such as a CD player, in order to add content into the Nest. On the right side of the front panel are female USB sockets 140 and 150 used for connecting foreign MP3 players to the Nest; a female Ethernet connector 160 for connecting the Nest to a computer network; and a mini-jack socket 170 used to provide analog stereo audio-out for headphones.

For an embodiment of the present invention, a Nest includes one or more exchange ports 180, also referred to herein as "cradles," through which one or more hand-held digital music players, referred to herein as "Eggs," can be connected to the Nest, for loading songs from a digital music library stored on the Nest thereto. Such exchange ports may be circular or oval ports into which Eggs in the shape of film canisters are inserted. Thus it may be appreciated that Eggs may be "charged up" with songs while they are plugged into the cradles of the Nest.

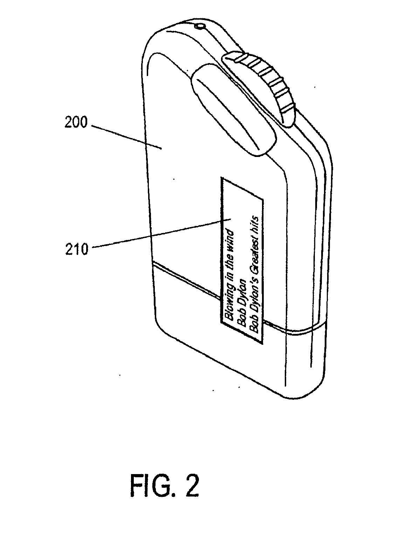

FIG. 2 is a side view of an Egg 200, in accordance with an embodiment of the present invention. Egg 200 is shown with a panel 210 that displays meta-data for a song currently being played. As can be seen in FIG. 2, the meta-data includes a title ("Blowing in the Wind"), an author ("Bob Dylan") and an album ("Bob Dylan's Greatest Hits").

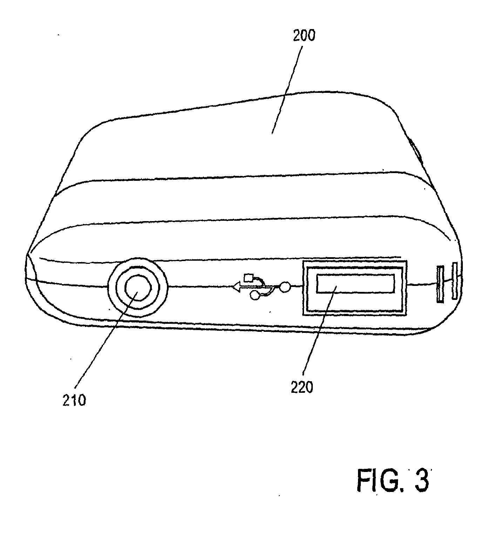

FIG. 3 is a bottom view of the Egg 200 of FIG. 2, in accordance with an embodiment of the present invention. The bottom of the Egg includes a female audio/video connector 210 for transferring analog audio and analog video between the Egg and a Nest; and a female USB connector 220 for transferring digital data between the Egg and a Nest, between the Egg and a "filling station" kiosk, and between the Egg and another Egg. Corresponding to connectors 210 and 220, the cradles of the Nest contain male analog audio/video connector and male USB connectors (not shown in FIG. 1).

A typical usage scenario for a Nest and Egg is as follows. A listener sets his cable or satellite receiver box to a specific music channel, such as from a commercial-free radio station, such as The Music Choice^{®}, and activates the Nest to capture songs from the music channel. The Nest automatically creates a digital music library and imports the broadcast songs therein. Thereafter, the listener plugs an Egg into a cradle of the Nest, and downloads selected songs from the music library onto the Egg. If the Nest is connected to the listener's speaker system, then the listener may also pipe music from the Nest into speakers in various rooms. If the Nest is connected to a home network, the listener may stream audio to a computer that is authorized to work with the Nest.

In addition to a Nest being able to download songs to the Egg when the Egg is connected to the Nest, the Nest is also able to remove songs stored in the Egg. Thus, if the Egg storage is full, the Nest can remove songs from the Egg, in order for the Egg to download a new set of songs.

Eggs of embodiments of the present invention may receive digital music from other sources, in addition to the Nest. Thus the Eggs may be compatible with kiosks, such as music kiosks located in music distribution stores, used for listening to songs prior to purchase and for subsequent purchase. When an Egg is connected to a Nest, the digital music received from other devices and stored within the Egg can be archived on the Nest.

An Egg may receive control commands through its USB connector. Specifically,
- when connected to a Nest, the Nest may issue control commands to the Egg, such as a command to advance to the next song; and
- when connected to a docking station, such as a docking station for the Egg in a room of a house, the docking station may receive infra red commands issued by a user, and translate them into control commands to the Egg over the USB connector.

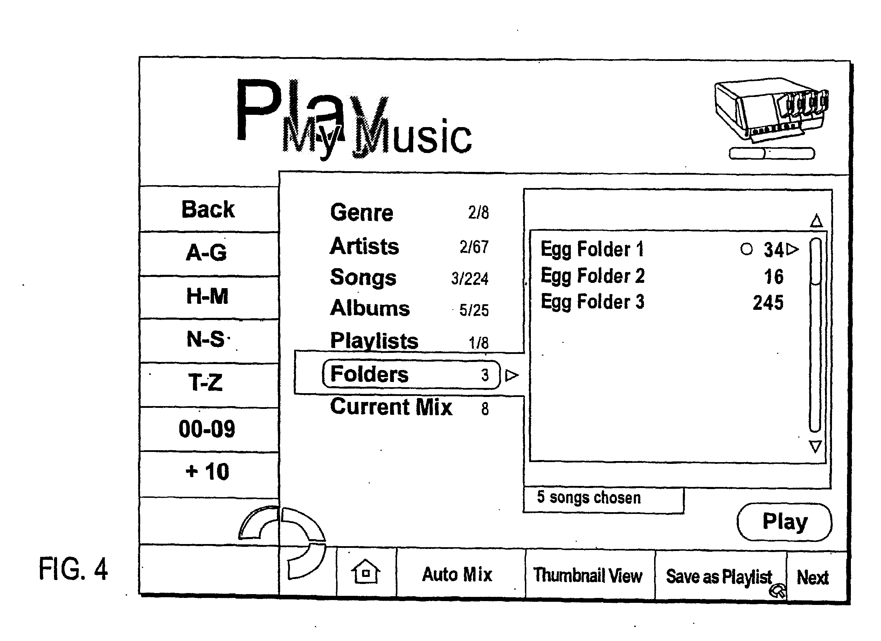

FIG. 4 is an illustration of a graphical user interface (GUI) for copying songs from the Nest of FIG. 1 into the Egg of FIG. 2, in accordance with an embodiment of the present invention. The GUI shown in FIG. 4 is displayed on a television or other display device connected to the Nest, and interacted with through use of a remote control device, such as an infra-red control unit. As such, the GUI of FIG. 4 is intended for navigation with simple directional buttons and a select button.

The GUI shown in FIG. 4 is used to organize a digital music library and create playlists; i.e., sequences of songs for playing from the Nest, or for copying to an Egg for playback from the Egg.

### Copyright Management

An enhanced embodiment of the present invention incorporates digital rights management. In accordance with an embodiment of the present invention, an Egg is registered with at most one Nest, and only Eggs registered with a Nest have the right to check-out non-promotional songs therefrom, as described hereinbelow. Typically, a Nest will have multiple Eggs registered with the Nest.

In accordance with an embodiment of the present invention, a song within a Nest or an Egg is labeled as "Purchased," "Recorded," or "Try & Buy." A "Purchased" song is one that is paid for by a consumer. Purchased songs include inter alia songs purchased through an Internet service such as iTunes^{®} or Napster^{®}, songs purchased through a kiosk, and songs copied and converted ("ripped") to a format such as MP3 from a CD that is purchased. "Recorded" songs include songs recorded for a consumer from a cable or satellite music station. "Try & Buy" songs are promotional or trial versions of songs that are provided to a consumer for free, and eventually expire. If the consumer wishes to continue to listen to such songs, he must obtain a Purchased or Recorded version of the song.

Expiration of a Try & Buy song may occur inter alia after a fixed time period, such as thirty days, or after a fixed number of playbacks of the song. Upon expiration, a Try & Buy song may cease to play altogether, or may play only a down-sampled version of the song or a header of the song, or may instead play a message explaining how to purchase the song, or otherwise enable purchase of the song.

The label of a Try & Buy song may include a URL or other such identifier for one or more web sites that serve as a clearinghouse through which the song can be purchased.

In accordance with an embodiment of the present invention, the Nest includes a list of songs that are already contained within the Nest and a list of songs that are not already contained within the Nest. For example, whenever a song from a specific album by a specific artist is contained within the Nest, the list includes other songs from the same album or other songs by the same artist. Songs that have been recorded within the Nest are labeled as Recorded. Other songs, not contained within the Nest, can be downloaded to the Nest as trial Try & Buy versions, upon request by a consumer. After listening to a Try & Buy version of a song, the consumer may purchase the song using the Nest, and the purchased song is then labeled as Purchased. Such labeling of a song as Recorded, Purchased or Try & Buy serves to identify the copyrights associated with the song.

When a song is copied from one device to another device where the two devices are registered with one another, such as from a Nest to an Egg that is registered with the Nest, or from an Egg to a Nest that the Egg is registered with, the label of the song is maintained; i.e., the label of the song on the target device is set to the label of the song on the source device. For example, if a Try & Buy song is copied from a Nest to an Egg that is registered with the Nest, and then to another Egg that is also registered with the same Nest, then the song is labeled as Try & Buy on the two Eggs. Similarly, if an Egg is used to purchase a song from a kiosk and the song is subsequently copied to a Nest that the Egg is registered with, then the song is labeled as Purchased on the Egg and on the Nest.

When a song is copied from one device to another device where the two devices are not registered with one another, such as from a Nest to an Egg or from an Egg to a Nest, where the Egg is not registered with the Nest, then regardless of the label of the song on the source device, the song is labeled as Try & Buy on the target device.

**Table I summarizes the copyright labeling of a song on a target device.**

| **Table 1: Copyright Label of Song on Target Device with First Embodiment** | |
|---|---|
| | |
| **Source Device ->Target Device** | **Source Label ->Target Label** |
| Nest -> Egg registered with the Nest OR | Purchased -> Purchased |
| Egg registered with Nest -> Nest OR | Recorded -> Recorded |
| Egg-> Egg both Eggs registered with the same Nest | Try & Buy -> Try & Buy |
| Egg not registered with Nest -> Nest OR | Purchased -> Try & Buy |
| Nest -> Egg not registered with the Nest OR | Recorded -> Try & Buy |
| Egg ->Egg Eggs registered with the differents nests | Try & Buy -> Try & Buy |
| Cable / satellite broadcast -> Nest | -> Recorded |
| CD or other recording media (optical, magnetic, etc.) -> | |
| Nest | |
| CD or other recording media (optical, magnetic, etc.) -> | -> Purchased |
| Egg | |
| Internet music service (iTunes^{®}, Napster^{®}) -> Nest | |
| Music kiosk -> Egg | |

The logic of Table I assumes that any two devices can determine whether or not they are commonly registered. This capability can be achieved, for example, if the registration information is built into a Nest and an Egg at the time of manufacture.

In addition to the logic of Table I, the label of a song within a Nest or an Egg is changed from Try & Buy to Purchased if a user purchases the song from a clearinghouse, using the Nest or the Egg, respectively.

For a second embodiment of the present invention, the Nest can directly determine whether an Egg is registered with it, but an Egg cannot directly determine whether it is registered with a Nest, or whether it and another Egg are registered to the same Nest. This occurs, for example, if an Egg has the capability of registering itself with any one of a plurality of Nests after it is manufactured. In this latter case, the logic of Table I is modified so that whenever a song is copied from a source Egg to a target Egg, the song is labeled as Try & Buy in the target Egg. Accordingly, the copyright labeling of a song on a target device follows Table II.

| **Table II: Copyright Label of Song on Target Device with Second Embodiment** | |
|---|---|
| | |
| **Source Device -> Target Device** | **Source Label -> Target Label** |
| Nest -> Egg registered with the Nest OR | Purchased -> Purchased |
| Egg registered with Nest -> Nest | Recorded -> Recorded |
| | Try & Buy -> Try & Buy |
| Nest -> Egg not registered with the Nest OR | Purchased -> Try & Buy |
| Egg not registered with Nest -> Nest OR | Recorded -> Try & Buy |
| Egg -> Egg | Try & Buy -> Try & Buy |
| Cable / satellite broadcast -> Nest Recorded | -> Recorded |
| CD or other recording media (optical, magnetic, etc.) -> | |
| Nest | |
| CD or other recording media (optical, magnetic, etc.) -> Egg | -> Purchased |
| Internet music service (iTunes^{®}, Napster^{®}) -> Nest | |
| Musie kiosk -> Egg | |

For this second embodiment, an egg that is registered with a first Nest may be re-registered with a second Nest. In such case, the Egg is no longer registered with the first Nest. There is a limit to the number of times an Egg can be re-registered, and after an Egg re-registers itself a maximum number of times, it is blocked from further re-registration.

For a third embodiment of the present invention, the distinction between Purchased and Recorded songs is ignored, and both are identified as "Owned" songs. For this third embodiment, the copyright labeling of a song on a target device follows Table III.

| **Table III: Copyright Label of Song on Target Device with Third Embodiment** | |
|---|---|
| | |
| **Source Device -> Target Device** | **Source Label -> Target Label** |
| Nest -> Egg registered with the Nest OR | |
| Egg registered with Nest -> Nest OR | Owned -> Owned |
| Egg -> Egg, both Eggs registered with the same Nest | Try &: Buy -> Try & Buy |
| Nest -> Egg not registered with the Next OR | |
| Egg not registered with Nest -> Nest OR | Owned -> Try & Buy |
| Egg -> Egg. Eggs registered with the different Nests | Try & Buy -> Try & Buy |
| Cable / satellite broadeast -> Nest | -> Owned |
| CD or other recording media (optical, magnetic, etc.) -> Nest | |
| CD or other recording media (optical magnetic, etc.)-> Egg | -> Owned |
| Internet music service (iTunes^{®}, Nnpster^{®}) -> Nest | |
| Music kiosk -> Egg | |

For yet a fourth embodiment of the present invention, copying of songs from a Nest to multiple Eggs, each of which is registered with the Nest, is restricted. This fourth embodiment has a more elaborate logic than the first, second, and third embodiments. In order to best describe this logic, the terms "checking-out" and "checking-in" of songs are used as follows. When an Egg is connected to a Nest in order to download songs from the Nest to the Egg, this is referred to herein as "checking-out" of songs. When an Egg is connected to a Nest in order to remove songs stored in the Egg, this is referred to herein as "checking-in" of songs.

Often the same song can be broadcast multiple times from a cable or satellite music station, while the Nest is operational to record the broadcast songs. For an embodiment of the present invention, the Nest stores a count for each Recorded song, which is incremented when the Nest encounters a broadcast song that has already been recorded onto the Nest archive. Such count thus corresponds to the total number of times the Recorded song has been broadcast while the Nest was recording, and is denoted henceforth as max_permitted_copies. For example, if a Recorded song is re-played five times on the Music Channel while the Nest is recording from the Music Channel, then max_permitted_copies = 5 for such song.

The max_permitted_copies count for a Recorded song is used to restrict the number of different Eggs that the Nest allows to check-out the song. For example, if max_permitted_copies = 5 for a Recorded song, then at most five different Eggs can check-out the song from the Nest. That is, for each Recorded song in its archive, the Nest stores a count for each song, which is incremented when an Egg checks-out the song. Such count corresponds to the number of Eggs that have checked-out the song, and is denoted henceforth as number_copies_checked_out. For example, if three Eggs have checked-out the same Recorded song from the Nest, then number_copies_checked_out = 3 for such song.

In accordance with an embodiment of the present invention, when an Egg checks-in a Recorded song with the Nest, thereby removing the song from the Egg, the number_copies_checked_out count is decremented. For example, if number_copies_checked_out = 3 for a Recorded song and an Egg that checked-out the song subsequently checks-in the song, then number_copies_checked_out is decremented to 2 for such song.

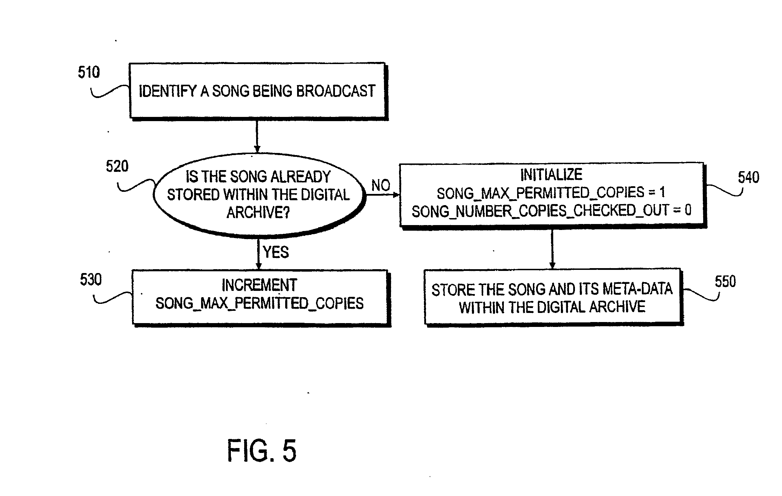

FIG. 5 is a simplified flowchart of a method for tracking the number of times the same song is broadcast while the Nest 100 of FIG 1 is recording music, in accordance with an embodiment of the present invention. At step 510 the Nest identifies a song being broadcast from a cable or satellite station that is currently being recorded by the Nest. At step 520 the Nest determines whether or not the song is already stored within the Nest's digital archive. If so, then at step 530 the Nest increments max_permitted_copies by one. Otherwise, at step 540 the Nest initializes max_permitted_copies = 1 for the song, and number_copies_checked_out = 0 for the song. At step 550 the Nest stores the Recorded song and its meta-data within the Nest's digital archive.

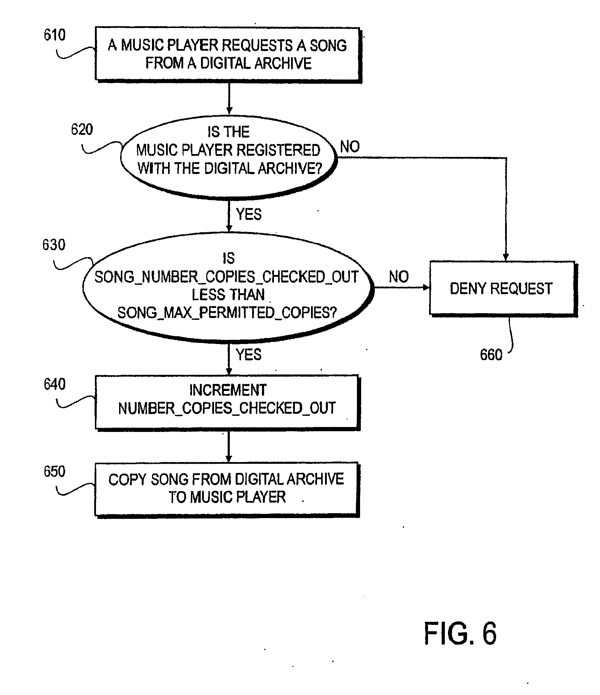

FIG. 6 is a simplified flowchart of a method for "checking-out" Recorded songs from the Nest of FIG. 1 to the Egg of FIG. 2 in accordance with an embodiment of the present invention. At step 610 an Egg that is connected to a cradle in a Nest requests to copy a Recorded song from the Nest to the Egg. At step 620 the Nest determines whether or not the Egg is registered with the Nest. If so, then at step 630 the Nest determines whether number_copies_checked_out is less than max_permitted_copies for the requested song. If so, then at step 640 the Nest increments number_copies_checked_out for the song by one, and at step 650 the Nest permits the Egg to copy the song from the Nest to the Egg.

If at step 620 the Nest determines that the Egg is not registered with the Nest, or if at step 630 the Nest determines that number_copies_checked_out is equal to max_permitted_copies, then the Egg's request for the Recorded song is denied at step 660. Alternatively, the Recorded song may be copied onto the Egg as a trial version, and labeled Try & Buy.

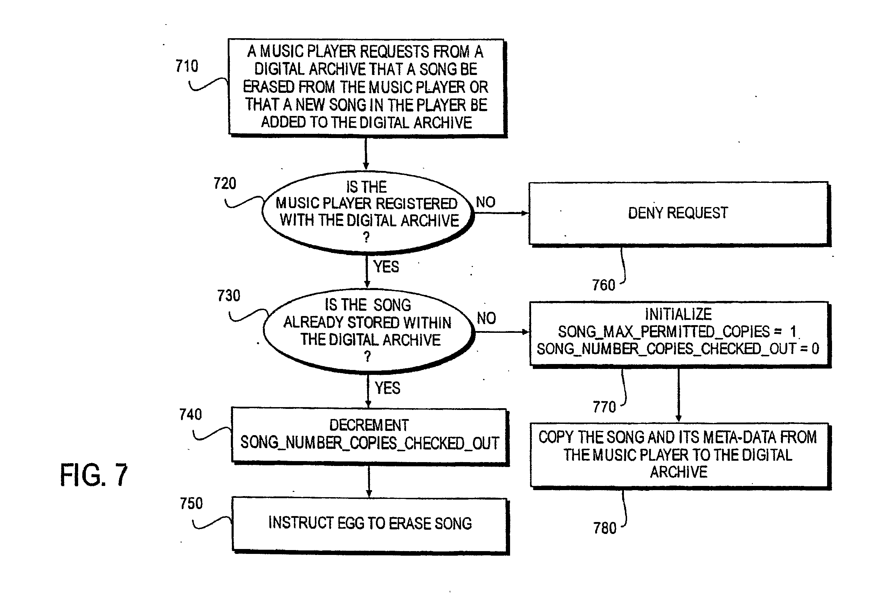

FIG. 7 is a simplified flowchart of a method for "checking-in" songs from the Egg of FIG. 2 to the Nest of FIG. 1, in accordance with an embodiment of the present invention. If a song labeled Try & Buy is checked in from an Egg to a Nest, then the song is also labeled Try & Buy on the Nest.

If a song labeled Recorded is checked in from an Egg to a Nest, then at step 710 an Egg connected to a cradle in the Nest requests to check-in the Recorded song. At step 720 the Nest determines whether or not the Egg is registered with the Nest. If so, then at step 730 the Nest determines whether or not the song already resides within the Nest's digital archive. If so, then at step 740 the Nest decrements number_copies_checked_out for the song by one, and at step 750 the Nest instructs the Egg to erase the song from the Egg.

If at step 720 the Nest determines that the Egg is not registered with the Nest, than the Egg's request to check-in the song is denied at step 760. Alternatively, the song may be copied onto the Nest as a trial version, and labeled Try & Buy. If at step 730 the Nest determines that the song does not currently reside within its digital archive, then this indicates that the Egg obtained the song from another source, such as from a kiosk. As such, at step 770 the Nest initializes max_permitted_copies = 1 for the song, and number_copies_checked_out = 0 for the song. At step 780 the Nest copies the song and its meta-data from the Egg into the Nest's digital archive.

When a Recorded song is copied from a first Egg to a second Egg in this embodiment, the song is labeled as Try & Buy on the second Egg, even if the first and second Egg are both registered to the same Nest.

Purchased songs may also be restricted for copying to multiple Eggs with similar logic, by setting max_permitted_copies = 1.

In general, embodiments of the present invention support a general digital rights configuration, by means of rules that specify whether or not a song residing on a source device has requisite permission for copying to a target device and, if so, how the song should be labeled when copied to the target device. Such rules may be embodied within functions
mayBeCopied(srcDeviceType, trgtDeviceType, isRegistered, srcDeviceLabel),
trgtLabel(srcDeviceType, trgtDeviceType, isRegistered, srcLabel),
   where srcDeviceType and trgtDeviceType are device specific parameters:
srcDeviceType indicates the type of the source device in which the digital song resides, including inter alia Nest and Egg; and
trgtDeviceType indicates the type of the target device onto which the digital song is to be copied, including inter alia Nest and Egg;
   where isRegistered is specific to a pair of devices:
   isRegistered indicates whether or not the source device and target device are commonly registered;
   where srcLabel and trgtLabel are both song and device specific parameters:
   srcLabel indicates the label of the song on the source device, including inter alia Recorded, Purchased and Try & Buy or, alternatively, Owned and Try & Buy; and
   trgtLabel indicates the label of the song on the target device, including inter alia Recorded, Purchased and Try & Buy or, alternatively, Owned and Try & Buy; and
   where:
   mayBeCopied indicates whether or not the song may be copied from the source device to the target device.

More generally, as described hereinabove, the functions mayBeCopied() and trgtLabel() may have additional parameters max_permitted_copies and number_copies_checked_out,
where max_permitted_copies and number_copies_checked_out are both song and device specific parameters:
max_permitted_copies indicates the maximum number of copies of the song that are permitted from the device; and
number_copies_checked_out indicates the current number of copies of the song that have been made from the device.

Alternatively the functions mayBeCopied() and trgtLabel() may be embodied as tables or other data structures.

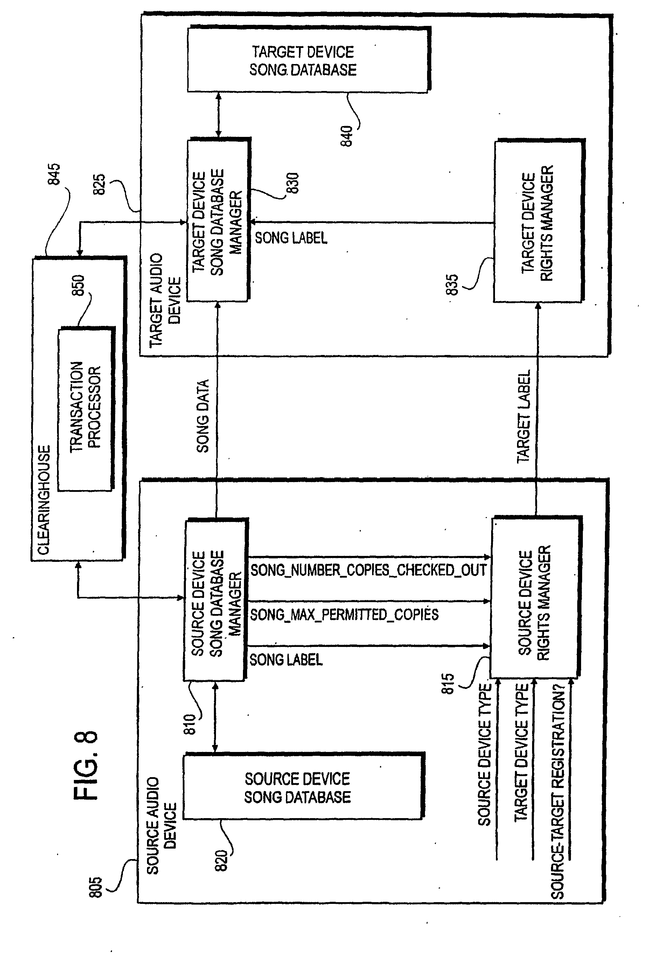

FIG. 8 is a simplified block diagram of a digital rights management system, in accordance with an embodiment of the present invention. Shown in FIG. 8 is a source device 805 including a database manager 810 and a rights manager 815. Database manager 810 preferably controls a database 820 that stores digital songs and meta-data associated therewith. The meta-data includes a label for each song, indicating whether the song is Purchased, Recorded or Try & Buy, as described hereinabove. Optionally, the meta-data may also include max_permitted_copies and number_copies_checked_out for one or more songs. The songs, their labels, and their max_permitted_copies and number_copies_checked_out parameters are accessible through database manager 810.

Digital songs and their meta-data may be stored in one or more database tables, within database 820, that can be joined. Alternatively, the binary song data may be stored in memory locations outside of database 820, and pointed to by address entries in database 820. Database 820 may instead be structured as a plurality of databases.

Also shown in FIG. 8 is a target device 825, including its own database manager 830, rights manager 835, and database 840.

Rights manager 815 determines whether or not a song resident on source device 810 may be copied to a specified target device, such as target device 825. If copying of the song is permitted, then rights manager 815 further determines a label to be used for the song on the target device, referred to as the target label. In accordance with an embodiment of the present invention, rights manager 815 bases its determination on (i) the type of source device 805, (ii) the type of target device 825, (iii) the label of the song on source device 805, and (iv) the max_permitted_copies and number_copies_checked_out parameters for the song on source device 805. Rights manager 815 implements functions such as mayBeCopied() and trgtLabel() described hereinabove.

After rights manager 815 determines the target label, it transmits the song and the target label to target device 825. Target device 825 adds the song to its database 840 and labels the song in database 840 according to the target label.

Also shown in FIG. 8 is a clearing house 845 for purchasing songs. Source device 805 and target device 825 may purchase songs directly from clearing house 845. For songs not currently resident on source device 805 or target device 825, clearing house 845 sends the songs to the device that purchases them. For songs currently resident on source device 805 or target device 825 labeled Try & Buy, clearing house 845 sends an authorization to source database manager 810 or target database manager 830 to change the label of the songs from Try & Buy to Purchased. Clearing house 845 includes a transaction processor 850, which enables a user to purchase rights to songs and verifies the user's payment. Upon completion of a user's purchase of a song by transaction processor 850, clearing house 845 sends the songs to the user's device, or sends an authorization to the user's device to change the label of the song, as appropriate.

In accordance with an embodiment of the present invention, clearing house 845 also freely distributes Try & Buy versions of songs, which can be converted to Purchased versions at a later date, if a user so desires.

Clearing house 845 is administered by an entity that has distribution privileges for the songs it sells, such as a cable or satellite company.

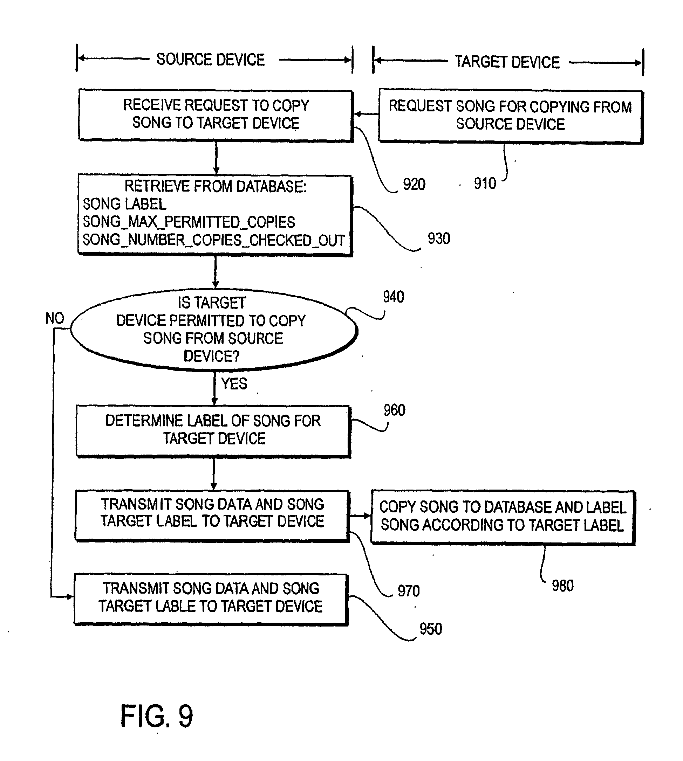

FIG. 9 is a simplified flow chart for a digital rights management method, in accordance with an embodiment of the present invention. As can be seen, FIG. 9 is divided into two columns, the leftmost column indicating steps performed by a source audio device, such as source device 805 (FIG. 8) and the rightmost column indicating steps performed by a target audio device, such as target device 825.

At step 910 the target device requests a song to be copied from the source device. At step 920 the source device receives the request and identifies the target device. In particular, the source device determines the type of the target device, and whether or not the source and target device are registered with one another.

At step 930 the source device determines the label for the requested song, and the max_permitted_copies and number_copies_checked_out parameters for the requested song. This information is contained within a source device database, such as database 820 (FIG. 8). At step 940 the source device determines whether or not the target device has permission to copy the song. Such determination is made by a rights manager within the source device, such as rights manager 815. If it is determined at step 940 that the target device does not have permission to copy the song from the source device, then at step 950 the source device denies the copy request. Otherwise, if it is determined at step 940 that the target device does have permission to copy the song from the source device, then at step 960 the source device determines how to label the song within the target device. Such determination is also made by a rights manager, such as rights manager 815.

At step 970 the source device transmits the requested song and its label to the target device, and at step 980 the target device copies the requested song to its database, and labels it accordingly.

In reading the above description, persons skilled in the art will realize that there are many apparent variations that can be applied to the methods and systems described. Thus, the configurable logic described hereinabove for songs and audio devices is applicable as well to movies and video devices, and to other types of media and media devices.

Transfer of songs from sources devices to target devices, and from clearing houses to devices, may be performed in batches of songs, such as entire albums, as well as for single songs. In addition, devices may be "hot-synched" to one another. For example, an Egg may be hot-synched to a Nest, using wired or wireless communication, so that the Nest is updated periodically with the songs in the Egg.

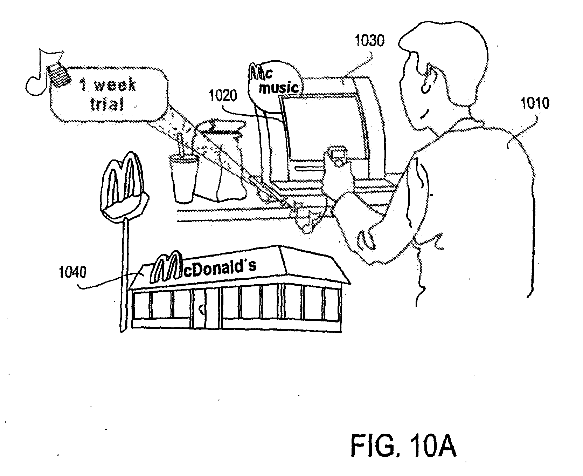

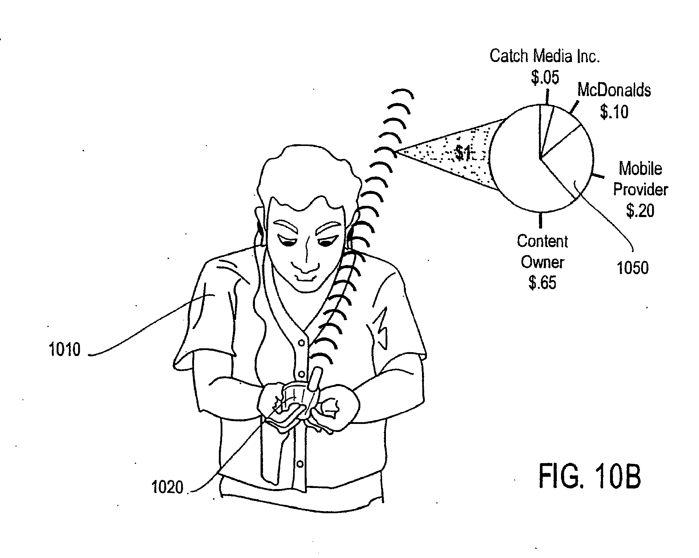

FIGS. 10A and 10B are simplified illustrations of a first consumer use case of acquiring a song in accordance with an embodiment of the present invention. As shown in FIG. 10A, a consumer 1010 downloads a trial version of a song onto his Egg 1020 from a McMusic kiosk 1030 located within a McDonald's store 1040. The song is labeled Try & Buy, and consumer 1010 has limited rights to play the song for a one-week trial period. Subsequently, as shown in FIG. 10B, consumer 1010 decides to purchase the song for $1.00 from a clearinghouse via a wireless communication. As a result of the purchase, the song is re-labeled as Purchased in Egg 1020, and consumer 1010 is granted full rights to the song.

Also shown in FIG. 10B is a pie chart 1050 illustrating how the $1.00 of revenue for the song is allocated between the content owner, the wireless provider, McDonald's and the owner of the present invention, as described hereinbelow.

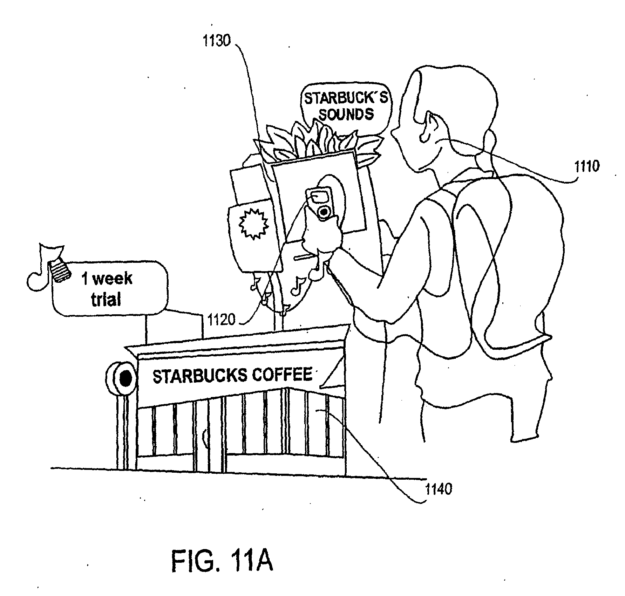

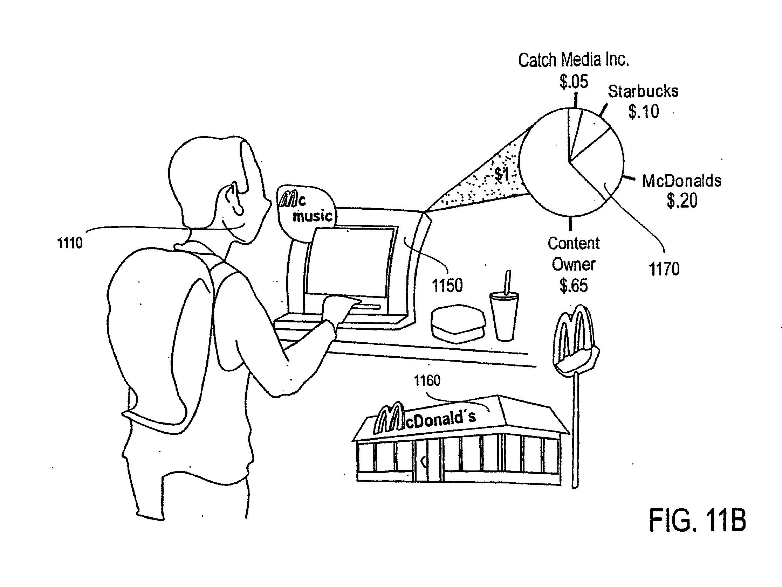

FIGS. 11A and 11B are simplified illustrations of a second consumer use case of acquiring a song in accordance with an embodiment of the present invention. As shown in FIG. 11A, a consumer downloads a trial version of a song onto his Egg 1120 from a Starbuck's Sounds music kiosk 1130 located within a Starbuck's store 1140. The song is labeled Try & Buy, and consumer 1110 has limited rights to play the song for a one-week trial period. Subsequently, as shown in FIG. 11B, consumer 1110 decides to purchase the song for $1.00 from a McMusic kiosk 1150 located within a McDonald's store 1160. As a result of the purchase, the song is re-labeled as Purchased in Egg 1020, and consumer 1010 is granted full rights to the song.

Also shown in FIG. 11B is a pie chart 1170 illustrating how the $1.00 of revenue for the song is allocated between the content owner, Starbuck's, McDonald's and the owner of an embodiment of the present invention, as described hereinbelow.

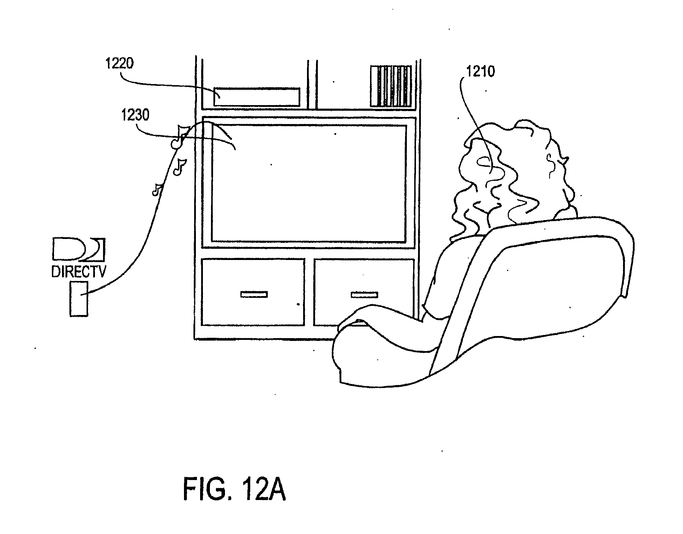

FIGS. 11A, 11B and 11C are simplified illustrations of a third consumer use case of acquiring a song in accordance with an embodiment of the present invention. As shown in FIG. 12A, a consumer 1210 records a song from a DirectTV broadcast music stations onto her Nest 1220, while enjoying home entertainment on her television 1230. The recorded song is labeled as Recorded, and consumer 1210 has corresponding rights to the song. Consumer 1210 copies the song from her Nest 1220 onto her Egg 1240.

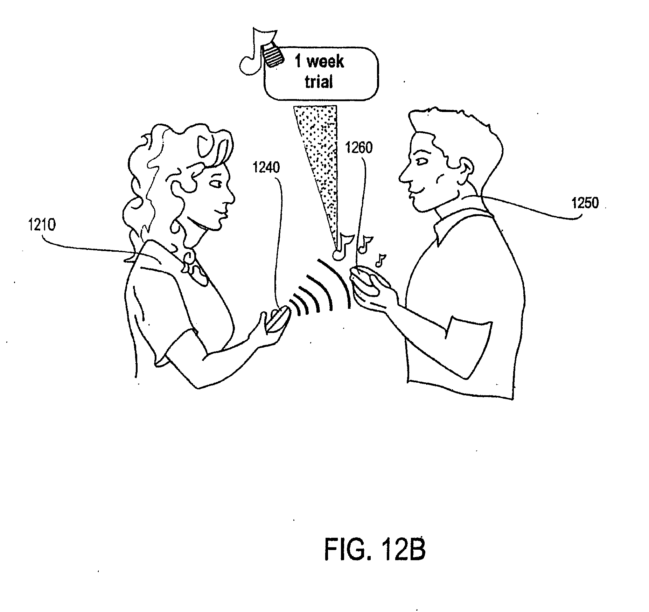

Subsequently, as shown in FIG. 12B, consumer 1210 meets a friend, namely consumer 1250, who expresses interest in the song. Consumer 1210 then copies the song from her Egg 1240 onto his Egg 1260. Although the song is labeled as Recorded on Egg 1240, the song is labeled as Try & Buy on Egg 1260. As such consumer 1250 only has limited rights to play the song for a one week trial period.

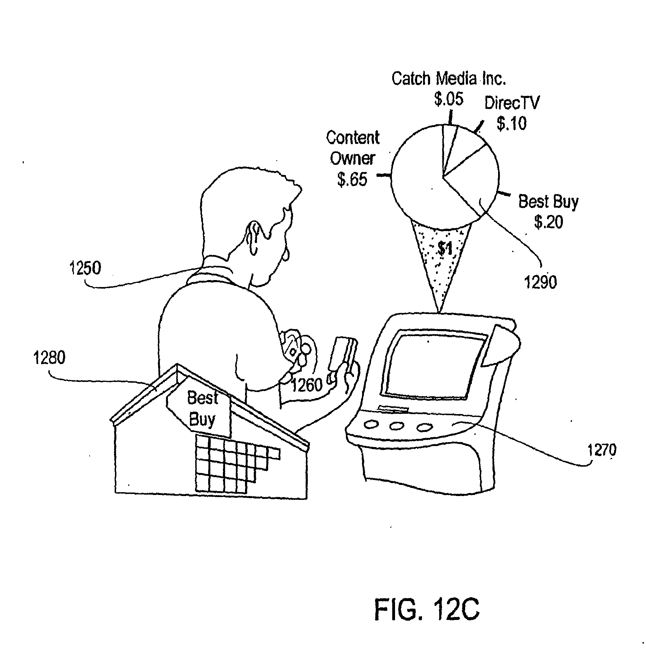

Subsequently, as shown in FIG. 12C, consumer 1250 decides to purchase the song, which he does for $1.00 via a music kiosk 1270 located in a Best Buy store 1280. After purchasing the song, the song is re-labeled from Try & Buy to Purchased within Egg 1260, as a result of which consumer 1250 then has full rights to the song.

Also shown in FIG. 12C is a pie chart 1290, indicating allocating of the $1.00 purchase price for the song between the content owner, DirectTV, Best Buy and the owner of the present invention, as described hereinbelow.

### Implementation of the Present Invention in Conjunction with Conventional Digital Rights Management Systems

The digital rights management of embodiments of the invention can be implemented in conjunction with a third-party DRM method or system. Conventional DRM systems typically allow usage of music on a disconnected mobile device, but do not allow sharing from one disconnected device to another. With conventional DRM systems, if a disconnected mobile device receives music for which it does not have a valid license, it is not able to play the music, and will not be granted a license until it connects to a license server, usually by docking to a personal computer.

In distinction, using an embodiment of the present invention, music may be shared from a first consumer's Egg to a second consumer's Egg, and the second consumer is granted limited Try & Buy access to the music, within an option to purchase the music.

Yet despite the drawbacks with conventional DRM systems, it is necessary to preserve the DRM wrappers for the sake of backward compatibility. If a conventional DRM wrapper is removed from digital music, even if it is replaced with a non-conventional DRM wrapper, then typically conventional players will not be able to play the music at all.

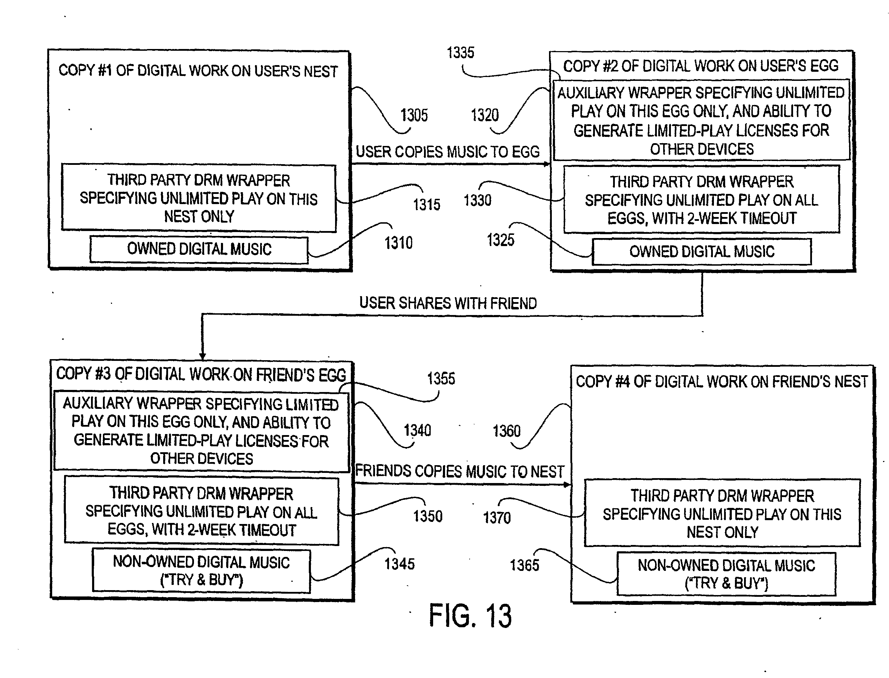

FIG. 13 is a simplified illustration of a workflow for implementing digital rights management in conjunction with a third-party DRM system, in accordance with an embodiment of the present invention. Shown in FIG. 13 is a first copy 1305 of a digital work stored in a user's Nest. The copy includes a digital audio portion 1310, which has been licensed by the user, and a third-party DRM wrapper 1315 specifying unlimited play for the user's nest only.

When the user copies the digital work from his Nest (copy 1305) to his Egg, a second copy, 1320, of the digital work is created. The second copy 1320 includes a digital audio portion, 1325, substantially similar to portion 1310, and a third-party DRM wrapper 1330. However, the third-party DRM wrapper has been modified so as to specify unlimited play on all eggs, with a prescribed timeout, such as a two-week timeout. In addition, an auxiliary DRM wrapper 1335 is added to the second copy, 1320, specifying unlimited play on the user's Egg, and the ability to generate limited play licenses for other devices.

When the user shares the digital work with his friend, a third copy, 1340, of the digital work is created as the digital work is copied from the user's Egg (copy 1320) to his friend's Egg (1340). The third copy 1340 includes a digital audio portion, 1345, substantially similar to portion 1310, and a third-party DRM wrapper 1350 that is substantially identical to the third-party digital wrapper 1330 from the second copy 1320. The third copy 1340 also includes an auxiliary DRM wrapper 1355, but in distinction to DRM wrapper 1335, DRM wrapper 1355 specifies limited play on the friend's Egg, and the ability to generate limited play licenses for other devices.

When the friend copies the digital work from the friend's Egg (copy 1340) to the friend's Nest, a fourth copy, 1360, of the digital work is created. The fourth copy 1360 includes a digital audio portion, substantially similar to portion 1310, and a third-party DRM wrapper 1370 specifying limited play on the friend's Nest only. It will be noted that the auxiliary DRM layer is removed in copy 1360. As such, the music on the friend's Nest can be played by a conventional player.

It may be appreciated in FIG. 13 that the auxiliary DRM wrappers 1335 and 1355, instead of being stored within various copies of the digital work, may instead be stored in separate files associated within the copies of the digital work, or may alternatively be stored in a database table having a primary key that serves as an identifier for a copy of the digital work. Similarly, the conventional third-party DRM wrappers 1315, 1330, 1350 and 1370 may also be stored in separate files or within a database table.

### Use an Embodiment of the Invention for Usage and Merchandising Tracking

As illustrated in FIGS. 10B, 11B, and 12C, an embodiment of the present invention has application to usage tracking for purposes of revenue sharing or aggregation of statistics. Licenses for digital music may be purchased through several channels, including inter alia:
(i) music recorded onto a Nest from broadcast, off-the-air;
(ii) music purchased through a Nest from a licensing authority; and
(iii) music purchased through an Egg from a music kiosk.
   Music for preview, with a Try & Buy wrapper, may be licensed from these same channels.

An embodiment of the present invention is advantageous for tracking the following information for songs:
(a) if recorded, when it was recorded and from which provider;
(b) if purchased directly, the fulfiller of the purchase;
(c) if upgraded from a Try & Buy version, the fulfiller of the original purchase by the original owner and the fulfiller of the purchase from the Try & Buy version;
(d) if shared, the customer who originally owned the copy, the original fulfiller, and the sharing chain of users; and
(e) play information for the current owner, whether played on the owner's Nest or the owner's Egg.

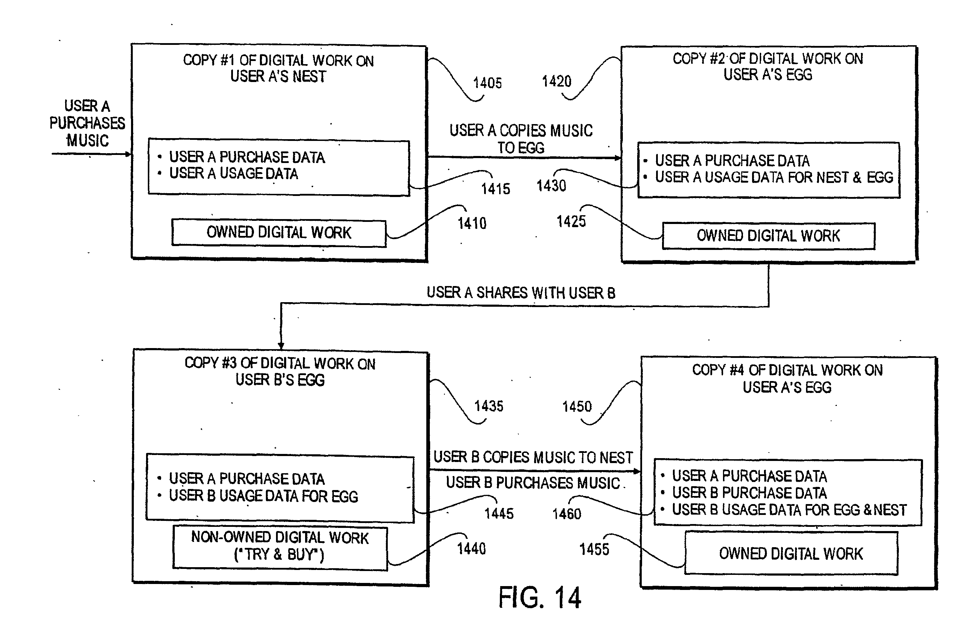

Reference is now made to FIG. 14, which is a simplified workflow for usage and merchandising tracking in accordance with an embodiment of the present invention. Shown in FIG. 14 is a first copy, 1405, of a digital work that is purchased by user A, on user A's Nest. User A may have purchased the digital work, for example, over the Internet through a licensing authority, or on a CD at a retail store. Copy 1405 includes a digital audio portion, 1410, and a record, 1415, including user A's purchase information and user A's usage data on user A's Nest.

When user A copies the digital work from his Nest to his Egg, a second copy of the digital work, 1420, is created. Copy 1420 includes a digital audio portion, substantially similar to digital audio portion 1410, and a record, 1430, including user A's purchase information and user A's usage data on user A's Nest and user A's Egg.

When user A shares the digital work with user B, a third copy of the digital work, 1435, is created. Copy 1435 is a Try & Buy copy, since user B has not yet purchased a license for the digital work. Copy 1435 includes a digital audio portion, 1440, substantially similar to digital audio portion 1410, and a record, 1445, including user A's purchase information and user B's usage data on user B's Egg.

When user B copies the digital work from user B's Egg to user B's Nest, a fourth copy of the digital work, 1450, is created. Copy 1450 includes a digital audio portion, 1455, substantially similar to digital audio portion 1410, and a record, 1460. When user B subsequently purchases a license for the digital work, record 1460 is updated to reflect user A's purchase data, user B's purchase data and user B's usage data on user B's Egg and user B's Nest.

For the purpose of merchandising, a portion of user B's purchase price may be paid to the fulfiller from which user A purchased the digital work. More generally, the present invention can be used to track a purchase of a digital work along a sharing chain, back to an original fulfiller from which the digital work was purchased; and a portion of the purchase prices along the sharing chain can be allotted to the original fulfiller.

It may be appreciated in FIG. 14 that the records 1415, 1430, 1445 and 1460, instead of being stored within various copies of the digital work, may instead be stored in separate files associated within the copies of the digital work, or may alternatively be stored in a database table having a primary key that serves as an identifier for a copy of the digital work.

Reference is now made to Appendix A, which includes a source listing of an XML file for usage and merchandising tracking, in accordance with an embodiment of the present invention. The XML file of Appendix A can be used for storing tracking records 1415, 1430, 1445 and 1460 (FIG. 14). As shown in Appendix A, the XML file includes a section ("UsageRules") with data for usage rules, including sub-sections for play restrictions, preview restrictions and copy restrictions. The XML file also includes a section ("SongData") with data for ownership and usage, including sub-sections for play data, ownership data and copy data. In addition, the XML file also includes a section ("Advertisinglnfo") for playing advertisements in conjunction with Try & Buy music.

In the foregoing specification, the invention has been described with reference to specific exemplary embodiments thereof. It will, however, be evident that various modifications and changes may be made to the specific exemplary embodiments without departing from the broader spirit and scope of the invention. Accordingly, the specification and drawings are to be regarded in an illustrative rather than a restrictive sense.

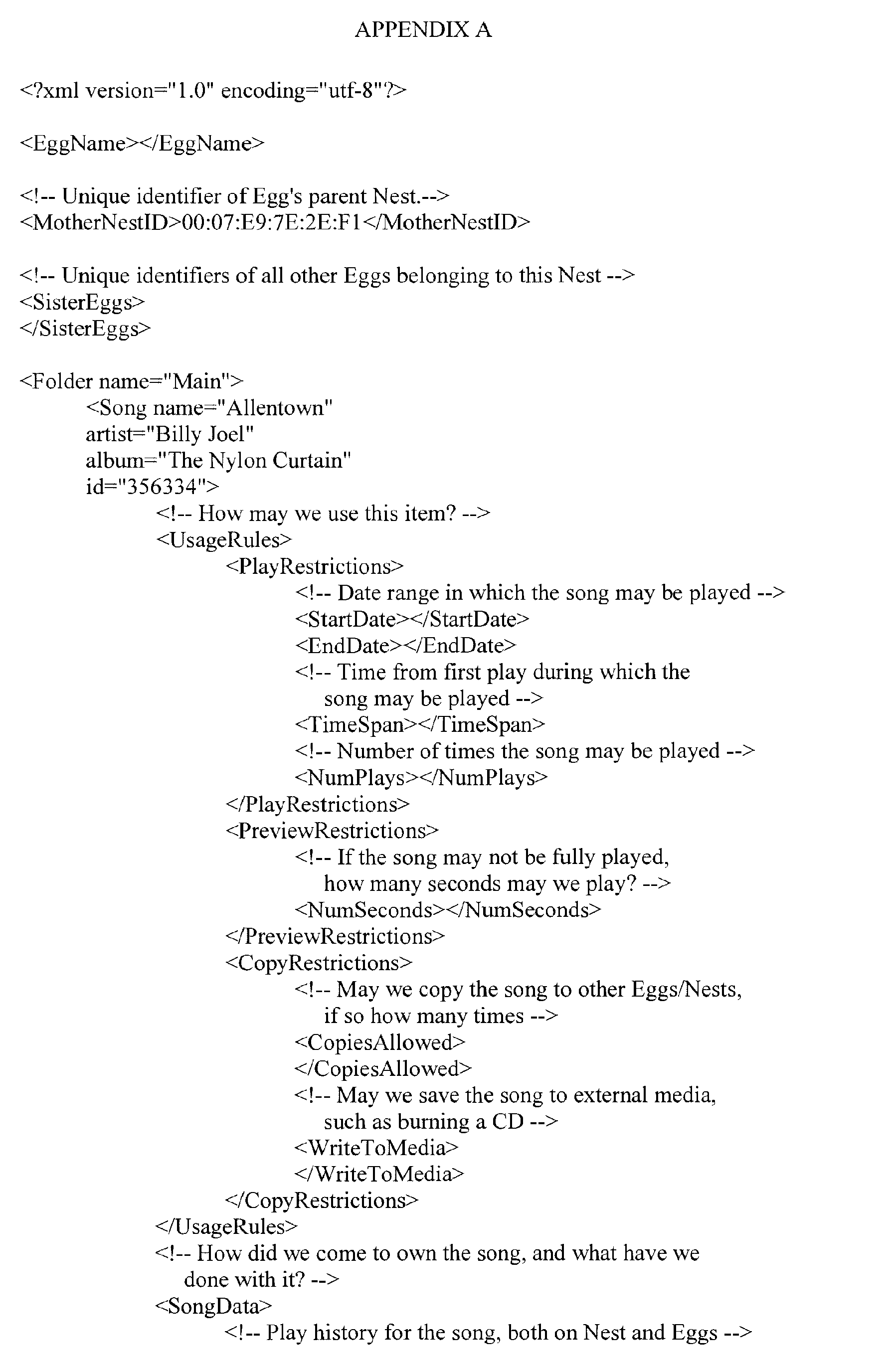

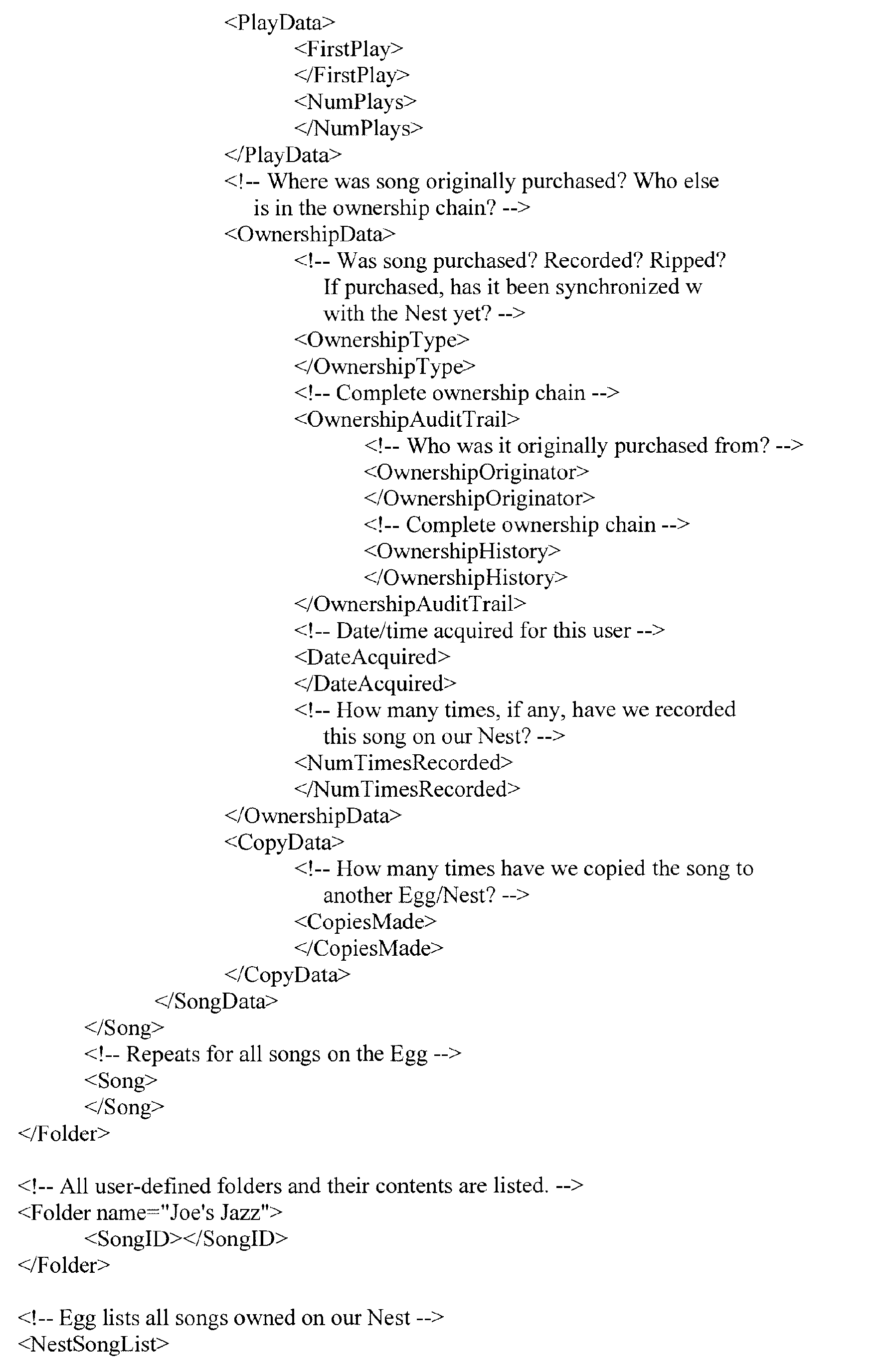

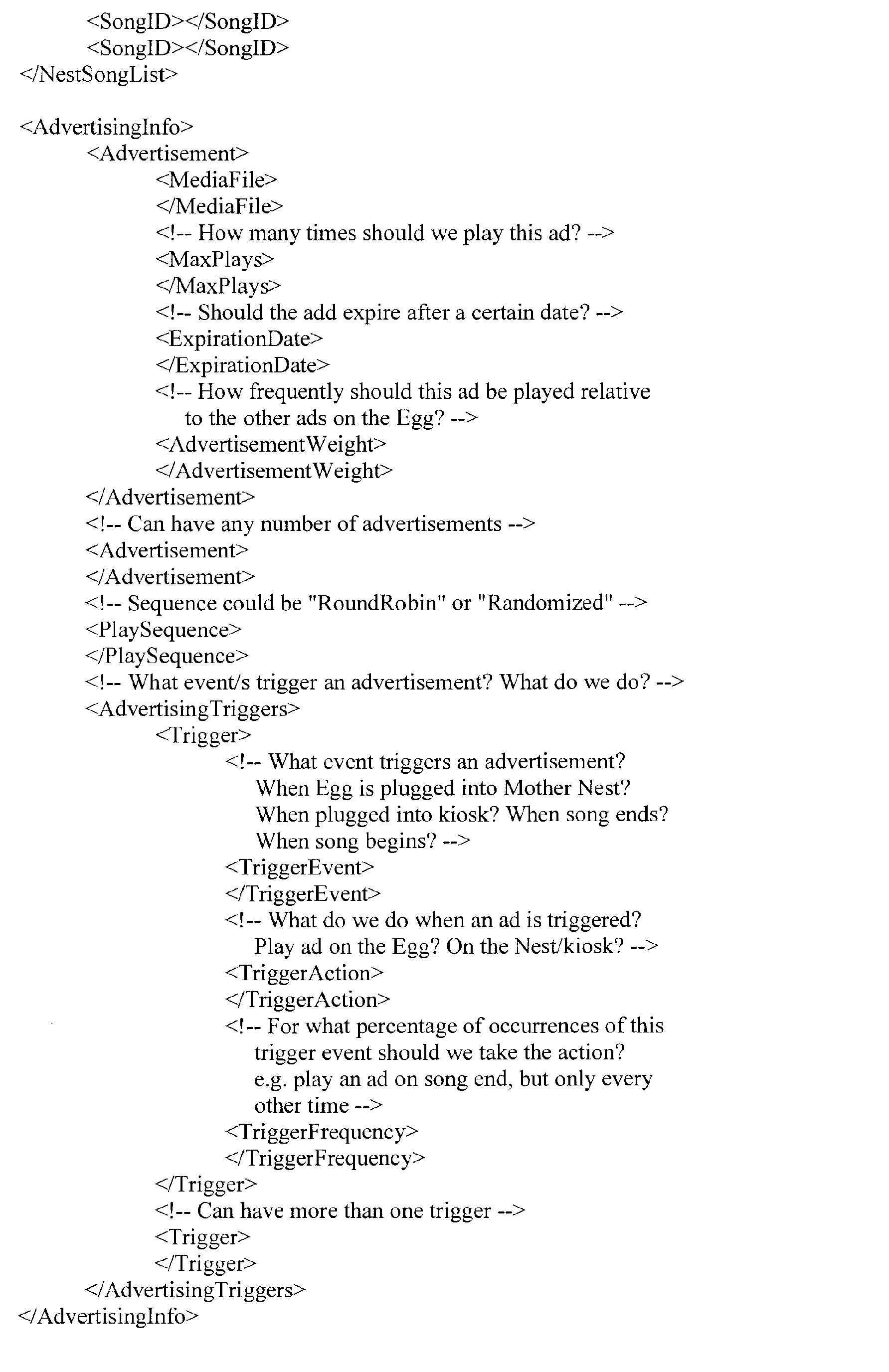

## Claims

1. A method for digital rights management for a copyright work that is copied from device to device from among a plurality of devices, some of which are parent devices and some of which are child devices, and wherein a child device may be registered with a parent device, comprising:
copying a digital work (1305) from a parent device, P1, to a child device, C1, registered with device P1, the digital work encapsulating digital rights management (DRM) data (1315) that serves to permit full access to the digital work by parent device P1, and to deny access to the digital work by devices other than device P1;
modifying the DRM data (1330) in the copy of the digital work (1320) within device C1, so as to permit full access to the digital work, for a prescribed time period, by device C1 and by child devices other than device C 1;
inserting auxiliary DRM data (1320) in the copy of the digital work (1320) within device C1, so as to permit full access to the digital work by device C1, and so as to permit limited access to the digital work by child devices other than device C1;
if the digital work is copied from device C1 to a parent device P2 other than device P1, then:
modifying the DRM data (1370) in the copy of the digital work (1360) within device P2, so as to permit limited access to the digital work by device P2; and
removing the auxiliary DRM data in the copy of the digital work within device P2; and
if the digital work is copied from device C1 to a child device C2 other than device C1, then
modifying the auxiliary DRM data (1355) in the copy of the digital work (1340) within device C2, so as to permit limited access to the digital work by child device C2 and so as to permit limited access to the digital work by child devices other than device C2.

2. The method of claim 1 wherein limited access includes access limited by a start date and time, and an end date and time.

3. The method of claim 1 or 2 wherein limited access includes a limitation on the number of times the digital work may be accessed.

4. The method of claim 1, 2 or 3 wherein limited access includes access to only a portion of the digital work.

5. The method of one of the claims 1 to 4 wherein the digital work includes a song, a movie and/or a picture.

6. A method for digital rights management for a copyright digital work that is copied from device to device from among a plurality of devices, some of which are parent devices and some of which are child devices, and wherein a child device may be registered with a parent device, and wherein a copy of the digital work may encapsulate digital rights management (DRM) data that serves to determine one of at least two levels of access, namely, (i) permit full access to the digital work, or (ii) permit limited access to the digital work, comprising:
enforcing rules for setting the DRM data within copies of the digital work that encapsulate DRM data, according to the following principles:
if the digital work is copied from a child device, C1, to a parent device, P1, with which C1 is registered, then the DRM data in the copy of the digital work within device P1 is kept at the same access level as the copy of the digital work within device C1;
if the digital work is copied from a child device, C1, which is registered with a parent device, P1, to another child device, C2, which is also registered with a parent device, P1, then the DRM data in the copy of the digital work within device C2 is kept at the same access level as the copy of the digital work within device C1;
if the digital work is copied from a child device, C1, which is registered with a parent device, P1, to a parent device, P2, other than P1, then the DRM data in the copy of the digital work within device P2 is set to access level (ii);
if the digital work is copied from a child device, C1, which is registered with a parent device, P1, to a child device, C2, that is not registered with device P1, then the DRM data in the copy of the digital work within device C2 is set to access level (ii);
if the digital work is copied from a parent device, P1, to another parent device, P2, then the DRM data in the copy of the digital work within device P2 is set to access level (ii);
if the digital work is copied from a parent device, P1, to a child device, C1, that is not registered with device P1, then the DRM data in the copy of the digital work within device C1 is set to access level (ii).

7. The method of claim 6 wherein copies of the digital work may be clear of DRM data, and wherein said enforcing rules further comprises the following principles:
if the digital work is clear of DRM data and is copied from a child device, C1, to a parent device, P1, with which C1 is registered, then DRM data set to access level (i) is inserted into the copy of the digital work within device P1;
if the digital work is clear of DRM data and is copied from a child device, C1, to another child device, C2, then the copy of the digital work within device C2 is left clear of DRM data.

8. The method of claim 7 wherein the digital work may be copied from a child device to a personal computer (PC), wherein a child device may be registered with a PC, and wherein said enforcing rules further comprises the following principles:
if the digital work includes DRM data and is copied from a child device, C1, to a PC with which the child device is registered, then the DRM data is set so that the PC can access the digital work only if device C1 is connected to the PC;
if the digital work includes DRM data and is copied from a child device, C1, to a PC with which the child device is not registered, then the DRM data in the copy of the digital work within the PC is set to prevent the PC from accessing the digital work; and
if the digital work is clear of DRM data and is copied from a child device, C1, to a PC, then the DRM data in the copy of the digital work within the PC is left clear of DRM data.

9. The method of one of the claims 6 to 8 wherein the digital work may be licensed from a kiosk to a child device, and wherein said enforcing rules further comprises the following principle:
if the digital work is copied from a kiosk to a child device, then the DRM data in the copy of the digital work within the child device is set to access level (i).

10. The method of one of the claims 6 to 9 wherein the digital work may be licensed from a licensing authority to a parent device, and wherein said enforcing rules further comprises the following principle:
if the digital work is copied from a licensing authority to a parent device, then the DRM data in the copy of the digital work within the parent device is set to access level (i).

11. The method of one of the claims 6 to 10 wherein a copy of the digital work including DRM data set to access level (ii) within a device may be licensed from a licensing authority for full access, and wherein said enforcing rules further comprises the following principle:
if a copy of the digital work including DRM data set to access level (ii) within a device is licensed from a licensing authority, then the DRM in the copy of the digital work is changed from access level (ii) to access level (i).

12. The method of one of the claims 6 to 11 wherein limited access includes access limited by a start date and time, and an end date and time.

13. The method of one of the claims 6 to 12 wherein limited access includes a limitation on the number of times the digital work may be accessed.

14. The method of one of the claims 6 to 13 wherein limited access includes access to only a portion of the digital work.

15. A system for digital rights management for a copyright work that is copied from device to device from among a plurality of devices, some of which are parent devices and some of which are child devices, and wherein a child device may be registered with a parent device, comprising:
a digital rights manager within a parent device P1, for:
copying a digital work (1305) from device P1 to a child device, C1, registered with device P1, the digital work encapsulating digital rights management (DRM) data (1315) that serves to permit full access to the digital work by parent device P1, and to deny access to the digital work by devices other than device P1;
modifying the DRM data (1330) in the copy of the digital work (1320) intended for device C1, so as to permit full access to the digital work, for a prescribed time period, by device C1 and by child devices other than device C1; and
inserting auxiliary DRM data (1320) in the copy of the digital work (1320) intended for device C1, so as to permit full access to the digital work by device C1, and so as to permit limited access to the digital work by child devices other than device C1; and
a digital rights manager within child device C1, for:
copying the digital work from device C1 to a parent device P2 other than device P1;
modifying the DRM data (1370) in the copy of the digital work (1360) intended for device P2, so as to permit limited access to the digital work by device P2;
removing the auxiliary DRM data in the copy of the digital work intended for device P2;
copying the digital work from device C1 to a child device C2 other than device C1; and
modifying the auxiliary DRM data (1355) in the copy of the digital work (1340) intended for device C2, so as to permit limited access to the digital work by child device C2 and so as to permit limited access to the digital work by child devices other than device C2.

16. The system of claim 15 wherein limited access includes access limited by a start date and time, and an end date and time.

17. The system of claim 15 or 16 wherein limited access includes a limitation on the number of times the digital work may be accessed.

18. The system of claim 15, 16 or 17 wherein limited access includes access to only a portion of the digital work.

19. A system for digital rights management for a copyright digital work that is copied from device to device from among a plurality of devices, some of which are parent devices and some of which are child devices, and wherein a child device may be registered with a parent device, and wherein a copy of the digital work may encapsulate digital rights management (DRM) data that serves to determine one of at least two levels of access, namely, (i) permit full access to the digital work, or (ii) permit limited access to the digital work, comprising:
a digital rights manager within a child device C1 for enforcing rules for setting the DRM data within copies of the digital work that encapsulate DRM data, according to the following principles:
if the digital work is copied from the child device, C1, to a parent device, P1, with which C1 is registered, then the DRM data in the copy of the digital work within device P1 is kept at the same access level as the copy of the digital work within device C1;
if the digital work is copied from the child device, C1, which is registered with a parent device, P1, to another child device, C2, which is also registered with a parent device, P1, then the DRM data in the copy of the digital work within device C2 is kept at the same access level as the copy of the digital work within device C 1;
if the digital work is copied from the child device, C1, which is registered with a parent device, P1, to a parent device, P2, other than P1, then the DRM data in the copy of the digital work within device P2 is set to access level (ii); and
if the digital work is copied from the child device, C1, which is registered with a parent device, P1, to a child device, C2, that is not registered with device P1, then the DRM data in the copy of the digital work within device C2 is set to access level (ii); and
a digital rights manager within a parent device P1 for enforcing rules for setting the DRM data within copies of the digital work that encapsulate DRM data, according to the following principles:
if the digital work is copied from the parent device, P1, to another parent device, P2, then the DRM data in the copy of the digital work within device P2 is set to access level (ii); and
if the digital work is copied from the parent device, P1, to a child device, C1, that is not registered with device P1, then the DRM data in the copy of the digital work within device C1 is set to access level (ii).

20. The system of claim 19 wherein copies of the digital work may be clear of DRM data, and wherein said digital rights manager within the child device C1 further enforces rules according to the following principles:
if the digital work is clear of DRM data and is copied from the child device, C1, to a parent device, P1, with which C1 is registered, then DRM data set to access level (i) is inserted into the copy of the digital work within device P1;
if the digital work is clear of DRM data and is copied from the child device, C1, to another child device, C2, then the copy of the digital work within device C2 is left clear of DRM data.

21. The system of claim 20 wherein the digital work may be copied from a child device to a personal computer (PC), wherein a child device may be registered with a PC, and wherein said digital rights manager within the child device C1 further enforces rules according to the following principles:
if the digital work includes DRM data and is copied from the child device, C1, to a PC with which the child device is registered, then the DRM data is set so that the PC can access the digital work only if device C1 is connected to the PC;
if the digital work includes DRM data and is copied from the child device, C1, to a PC with which the child device is not registered, then the DRM data in the copy of the digital work within the PC is set to prevent the PC from accessing the digital work; and
if the digital work is clear of DRM data and is copied from the child device, C1, to a PC, then the DRM data in the copy of the digital work within the PC is left clear of DRM data.

22. The system of claim 19, 20 or 21 wherein the digital work may be licensed from a kiosk to a child device, and further comprising a digital rights manager within the kiosk enforcing rules according to the following principle:
if the digital work is copied from a kiosk to a child device, then the DRM data in the copy of the digital work within the child device is set to access level (i).

23. The system of one of the claims 19 to 22 wherein the digital work may be licensed from a licensing authority to a parent device, and further comprising a digital rights manager within the licensing authority enforcing rules according to the following principle:
if the digital work is copied from a licensing authority to a parent device, then the DRM data in the copy of the digital work intended for the parent device is set to access level (i).

24. The system of one of the claims 19 to 22 wherein a copy of the digital work including DRM data set to access level (ii) within a device may be licensed from a licensing authority for full access, and wherein said digital rights manager within parent device P1 further enforcing rules according to the following principle:
if a copy of the digital work including DRM data set to access level (ii) within device P1 is licensed from a licensing authority, then the DRM in the copy of the digital work is changed from access level (ii) to access level (i).
